# EUROPÄISCHE PATENTSCHRIFT

(11) **EP 3 285 057 B1**
(45) Veröffentlichungstag und Bekanntmachung des Hinweises auf die Patenterteilung: **07.06.2023**
(21) Anmeldenummer: 17185834.3
(22) Anmeldetag: 11.08.2017
(51) Int. Cl.: G01L 19/14, G01L 23/10

(54) **DRUCKSENSOR FÜR HOHE DRÜCKE**
PRESSURE SENSOR FOR HIGH PRESSURES
CAPTEUR DE PRESSION ÉLEVÉE

(30) Priorität: 17.08.2016 EP 16184564
(43) Veröffentlichungstag der Anmeldung: 21.02.2018
(73) Patentinhaber: Kistler Holding AG, 8408 Winterthur (CH)
(72) Erfinder: Pfluger, Kim, 8404 Winterthur (CH)

(56) Entgegenhaltungen:
- WO-A1-2015/147061
- DE-A1-102007 042 439
- US-A- 3 461 327
- US-A- 3 801 838
- US-A1- 2010 294 028
- US-A1- 2015 034 039

## Beschreibung

### Technisches Gebiet

Die Erfindung betrifft einen Drucksensor nach dem Oberbegriff des unabhängigen Anspruchs.

### Stand der Technik

Drucksensoren sind bekannt und werden vielfältig eingesetzt. Insbesondere mit piezoelektrischen Drucksensoren können Drucke erfasst werden, die normalerweise im Bereich von 150bar bis 250bar liegen. Der Druck wird dabei als zeitlich sich ändernder Druckverlauf mit einer zeitlichen Auflösung von bis zu 100kHz erfasst. Neben einem Erfassen eines Zylinderdruckes in Verbrennungsmotoren, wie beispielsweise bei Ottomotoren, Dieselmotoren, Wankelmotoren, usw. lassen sich piezoelektrische Drucksensoren auch bei einer Drucküberwachung in Strahltriebwerken, Gasturbinen, Dampfturbinen, Dampfmaschinen, usw. einsetzen.

Ein solcher piezoelektrischer Drucksensor ist in der Schrift CH394637A offenbart. Der piezoelektrische Drucksensor weist eine Membran auf, deren Rand mit einem Gehäuse des piezoelektrischen Drucksensors verschweisst ist. Der auf die Membran wirkende Druck wird über einen Boden auf eine piezoelektrische Kristallbaugruppe, die im Inneren des Gehäuses übertragen. Für einen geringen Kraftnebenschluss zum Gehäuse hin weist die Membran zwischen Boden und Gehäuse eine ringförmige Einbuchtung auf. Der Druck erzeugt auf der piezoelektrischen Kristallbaugruppe elektrische Polarisationsladungen, welche über eine Rohrfeder als Messsignale abgegriffen werden. Die Messsignale sind proportional zur Grösse des Druckes. Über einen elektrischen Leiter werden die Messsignale von der Rohrfeder zu einer Buchse für eine Steckverbindung eines Signalkabels zu einer Auswerteeinheit abgeleitet. Die Buchse ist an einer von der Membran abgewandten Seite des Gehäuses angebracht.

Die Schrift US2015034039A1 zeigt einen piezoelektrischen Drucksensor zum Erfassen des Zylinderdruckes in Verbrennungsmotoren, welcher über eine Schulterdichtung in eine Öffnung einer Wandung des Verbrennungsmotors eingebaut ist. Die Schulterdichtung liegt zwischen Wandung und einem Gehäuse des piezoelektrischen Drucksensors, wobei ein Ende der Schulterdichtung in einer äusseren Ringnut des Gehäuses sitzt.

Auch die Schrift DE10200704239A1 bezieht sich auf einen Drucksensor zum Erfassen des Zylinderdruckes in Verbrennungsmotoren. Über eine Membran wirkt ein zu erfassender Druck auf eine Druckerfassungsvorrichtung in Form von Dehnmessstreifen. Der Drucksensor ist über ein zylinderförmiges Gehäuse in ein Befestigungsloch des Verbrennungsmotors eingebaut.

Und die Schrift US3801838A1 offenbart einen piezoelektrischen Drucksensor zum Erfassen von hochfrequenten Schockwellen. Über ein Aussengewinde eines Gehäuses des piezoelektrischen Drucksensors wird der piezoelektrische Drucksensor in eine Wand eingeschraubt. Die zu erfassenden Schockwellen dringen durch eine kleine Öffnung in der Wand auf eine Membran des piezoelektrischen Drucksensors.

Schliesslich zeigt US3461327A1 einen piezoelektrischen Drucksensors zum Erfassen von Drucken bei hohen Temperaturen mit einer Membran, über welche der zu erfassende Druck auf piezoelektrische Elemente wirkt.

Die Membran ist oft der kritische Teil eines piezoelektrischen Drucksensors. Obwohl die Membran in der Regel im Betrieb nur kleinen Verformungen ausgesetzt ist, wird sie auf Grund ihrer geringen Dicke mechanisch stark beansprucht und bestimmt meistens die Lebensdauer des piezoelektrischen Drucksensors. Zudem kann eine Membran aufwändig in der Herstellung sein, wenn Einbuchtungen oder komplizierte Geometrien hergestellt werden müssen. Eine einfache scheibenförmige Membran kann bei der Verwendung von üblichen Gehäusen in der Regel keine hohen Drucke mit einer hohen Lebensdauer standhalten, unter anderem auch deshalb, weil sich solche Gehäuse bei hohem Druck selbst verformen und dadurch mechanische Spannungen in der Membran zusätzlich erhöhen.

### Darstellung der Erfindung

Aufgabe der Erfindung ist es, die Nachteile des Stands der Technik zumindest teilweise zu überwinden. Insbesondere ist ein Drucksensor wünschenswert, der eine einfache, scheibenförmige und kostengünstige Membran aufweist und hohe Drucke, insbesondere bis wenigstens 1000bar bei einer Lebensdauer von insbesondere mindestens 10⁶ Lastzyklen, beherrscht.

Die Lösung der Aufgabe ist durch die Merkmale des unabhängigen Anspruchs definiert.

Unter Elastizität wird eine Eigenschaft eines Materials verstanden, unter einer mechanischen Spannung seine Form zu verändern und bei Wegfall der mechanischen Spannung in die ursprüngliche Form vor der Krafteinwirkung zurückzukehren. Die Steifigkeit ist ein Widerstand eines Bauteils gegen eine elastische Verformung. Die Steifigkeit hängt vom Material des Bauteils, einer Verarbeitung des Bauteils und einer Geometrie des Bauteils ab.

Unter einer Einschnürung ist insbesondere eine Querschnittsminderung gegenüber der mittleren Querschnittsfläche der Gehäusehülse zu verstehen. Unter einer Verstärkung ist eine Querschnittsvergrösserung gegenüber einer mittleren Querschnittsfläche der Gehäusehülse zu verstehen. Insbesondere weisen der Drucksensor, die Gehäusehülse und die Sensoranordnung eine Axialrichtung und eine Radialrichtung auf. Die Axialrichtung ist eine Richtung einer länglichen Ausdehnung vom Drucksensor, von der Gehäusehülse und von der Sensoranordnung. Die Radialrichtung steht senkrecht zur Axialrichtung. Querschnitte beziehen sich dabei immer auf Schnitte in Radialrichtung der Gehäusehülse.

Mit anderen Worten stellt eine Einschnürung insbesondere einen Bereich der Gehäusehülse dar, welcher gegenüber einer mittleren Wandstärke der Gehäusehülse eine verminderte Wandstärke aufweist. Im Speziellen ist die Einschnürung ein Bereich der Gehäusehülse, welcher gegenüber zwei unmittelbar angrenzenden Bereichen eine verminderte Wandstärke aufweist. Entsprechend ist eine Verstärkung insbesondere ein Bereich der Gehäusehülse, welcher gegenüber einer mittleren Wandstärke der Gehäusehülse eine erhöhte Wandstärke aufweist. Im Speziellen ist die Verstärkung ein Bereich der Gehäusehülse, welcher gegenüber zwei unmittelbar angrenzenden Bereichen eine erhöhte Wandstärke aufweist.

Die Mittelung der Querschnittfläche oder der Wandstärke erfolgt dabei insbesondere über eine gesamte Länge der Gehäusehülse in der Axialrichtung des Drucksensors.

Solch eine Gehäusehülse ist einfach und kostengünstig herstellbar. Mittels der Einschnürung und/oder der Verstärkung lässt sich auf einfache Weise für eine vorgegebene Druckänderung eine gewünschte Längenänderung der Gehäusehülse einstellen.

Unter einer Druckänderung ist eine Änderung des Druckes zu verstehen, den der Drucksensor erfassen soll und dem die Membran und zumindest Teile der Gehäusehülse im Betrieb ausgesetzt sind. Dieser zu erfassende Druck übt demnach eine Kraft auf die Membran aus. Insbesondere wirkt die Kraft als Normalkraft entlang der Axialrichtung der Gehäusehülse.

Mit Längenänderung ist zum einen eine axiale Längenänderung, insbesondere in der Axialrichtung der Gehäusehülse gemeint. Mit Längenänderung ist aber auch eine radiale Längenänderung, insbesondere in einer Radialrichtung der Gehäusehülse gemeint. Entsprechend ist mit einer Längenänderung der Sensoranordnung bei einer Druckänderung sowohl eine Längenänderung der Sensoranordnung in Axialrichtung und in Radialrichtung der Sensoranordnung gemeint. Ferner ist eine elastische und reversible Längenänderung gemeint. Eine Längenänderung der Gehäusehülse bei einer Druckänderung hängt von den elastischen Materialeigenschaften und der Geometrie der Gehäusehülse ab. Bei der Geometrie sind insbesondere der Querschnitt oder das Querschnittsprofil der Gehäusehülse und eine absolute Länge der Gehäusehülse in Axialrichtung von Bedeutung. Entsprechend hängt eine Längenänderung der Sensoranordnung bei einer Druckänderung von den elastischen Materialeigenschaften und der Geometrie der Sensoranordnung ab. Bei den elastischen Materialeigenschaften der Sensoranordnung ist zu berücksichtigen, dass die Sensoranordnung aus verschiedenen Materialien bestehen kann, die insbesondere in Axialrichtung der Sensoranordnung schichtweise angeordnet sein können. Bei der Geometrie sind insbesondere der Querschnitt der Sensoranordnung und eine absolute Länge der Sensoranordnung in Axialrichtung von Bedeutung. Eine Differenz bei der Längenänderung der Gehäusehülse und der Längenänderung der Sensoranordnung verursacht mechanische Spannungen insbesondere im Bereich der mechanischen Verbindung der Membran mit der Gehäusehülse und/oder in der Membran selbst, da die Membran im Vergleich mit der Gehäusehülse ja eine geringe Dicke aufweist.

In einer weiteren Ausführungsform ist die Einschnürung derart ausgebildet, dass bei einer Druckänderung die Differenz zwischen der Längenänderung der Gehäusehülse und der Längenänderung der Sensoranordnung weitgehend gleich Null ist. Eine Differenz zwischen der Längenänderung der Gehäusehülse und der Längenänderung der Sensoranordnung von "weitgehend gleich Null" bedeutet vorliegend, dass bei einer Druckänderung die daraus resultierende Längenänderung der Gehäusehülse kleiner/gleich einer Elastizitätsgrenze des Materials der Gehäusehülse ist und dass bei einer Druckänderung die daraus resultierende Längenänderung der Sensoranordnung kleiner/gleich einer Elastizitätsgrenze des Materials der Sensoranordnung ist. Unter der Elastizitätsgrenze eines Materials wird im Sinne der Erfindung die Grösse einer mechanischen Spannung verstanden, unterhalb welcher das Material elastisch ist, d.h. das Material nimmt wieder eine ursprüngliche Form an, wenn die mechanische Spannung nicht mehr anliegt. Unterhalb der Elastizitätsgrenze wird das Material durch die mechanische Spannung nicht-dauerhaft (reversibel) verformt, oberhalb der Elastizitätsgrenze erfolgt eine dauerhafte (irreversible) plastische Verformung.

Insbesondere bei hohen Drucken von mehr als 300bar ist die Differenz zwischen der Längenänderung der Gehäusehülse und der Längenänderung der Sensoranordnung so gering, dass aus der Differenz resultierende mechanische Spannungen in der mechanischen Verbindung der Membran mit der Gehäusehülse kleiner/gleich einer Elastizitätsgrenze des Materials der mechanischen Verbindung der Membran (mit der Gehäusehülse und/oder des Materials der Membran selbst ist. Dadurch wird eine dauerhafte plastische Verformung der mechanischen Verbindung der Membran mit der Gehäusehülse und/oder der Membran selbst vermieden, welche wiederum die Lebensdauer des Drucksensors herabsetzt. Dies insbesondere über den gesamten Arbeitsbereich des Drucksensors von beispielsweise 0bar bis 1500bar (typische Überlastgrenze), im Speziellen von 0bar bis 1000bar (Normalbetrieb).

Eine Verstärkung der Gehäusehülse hat den Vorteil, dass sich die Gehäusehülse bei hohem Druck im Bereich der Verstärkung weniger verformt, insbesondere auch weniger in Radialrichtung verformt. Bei hohen Drucken kann sich die Gehäusehülse verformen, so dass sich ein Durchmesser der Gehäusehülse in Radialrichtung verringert. Über die absolute Länge der Gehäusehülse gesehen biegt sich die Gehäusehülse in ihrem Mittenbereich konkav durch. Diese Durchbiegung im Mittenbereich der Gehäusehülse kann durch lokale Verstärkung verhindert werden. Die Verstärkung erniedrigt in diesem Mittenbereich die Elastizität der Gehäusehülse.

Bei einer Vergrösserung des Innendurchmessers der Gehäusehülse kann in einer Querschnittsbetrachtung die Einschnürung zum Beispiel näherungsweise halbkreisförmig oder dreieckig sein.

In einer weiteren Ausführungsform des erfindungsgemässen Drucksensors beträgt eine Tiefe der Einschnürung in der Radialrichtung der Gehäusehülse in etwa die Hälfte einer mittleren Wandstärke der Gehäusehülse. Eine Tiefe der Einschnürung kann in der Radialrichtung der Gehäusehülse in einem Bereich liegen von 5% bis 80% der mittleren Wandstärke der Gehäusehülse, insbesondere in einem Bereich von 25% bis 75% der mittleren Wandstärke der Gehäusehülse und im Speziellen in einem Bereich von 45% bis 55% der mittleren Wandstärke der Gehäusehülse.

Eine Breite der Einschnürung in der Axialrichtung der Gehäusehülse kann in einem Bereich liegen von 30% bis 300% der mittleren Wandstärke der Gehäusehülse, insbesondere in einem Bereich von 60% bis 200% der mittleren Wandstärke der Gehäusehülse, und im Speziellen in einem Bereich von 90% bis 120% der mittleren Wandstärke der Gehäusehülse.

Die Einschnürung kann nahe dem unteren Ende der Gehäusehülse angeordnet sein, d. h. in der Nähe der Membran. Die Einschnürung kann vom unteren Ende der Gehäusehülse, und/oder von der Membran, beabstandet sein. Die Einschnürung kann sich insbesondere auf der Höhe einer Bodenplatte der Sensoranordnung befinden. Dies hat sich als besonders vorteilhaft erwiesen. Die Bodenplatte befindet sich oberhalb der Membrane. "Auf der Höhe von X" bedeutet dabei "im gleichen Abstand oder Abstandsbereich vom unteren Ende der Gehäusehülse wie X".

Bei einer Verringerung des Aussendurchmessers der Gehäusehülse kann eine Höhe der Einschnürung, gemessen in der Radialrichtung der Gehäusehülse, in einem Bereich liegen von 1% bis 50% der mittleren Wandstärke der Gehäusehülse, insbesondere in einem Bereich von 3% bis 30% der mittleren Wandstärke der Gehäusehülse, und im Speziellen in einem Bereich von 5% bis 15% der mittleren Wandstärke der Gehäusehülse. Eine Breite der Einschnürung, bemessen in der Axialrichtung der Gehäusehülse, kann ein Vielfaches der Höhe der Einschnürung betragen. Die Einschnürung kann sich vom unteren Ende der Gehäusehülse nach oben erstrecken. Die Einschnürung kann sich insbesondere auf einer Höhe der unteren Hälfte einer Bodenplatte der Sensoranordnung befinden.

Die Verstärkung kann auf der Innenseite der Gehäusehülse angeordnet sein, d. h. die Verstärkung kann einer Verkleinerung des Innendurchmessers der Gehäusehülse entsprechen. Eine Höhe der Verstärkung, gemessen in der Radialrichtung der Gehäusehülse, kann in einem Bereich liegen von 1% bis 50% der mittleren Wandstärke der Gehäusehülse, insbesondere in einem Bereich von 3% bis 30% der mittleren Wandstärke der Gehäusehülse, und im Speziellen in einem Bereich von 5% bis 15% der mittleren Wandstärke der Gehäusehülse. Eine Breite der Verstärkung, bemessen in einer Axialrichtung der Gehäusehülse, kann ein Vielfaches der Höhe der Verstärkung betragen. Eine Breite der Verstärkung kann auch ein Vielfaches der Breite der Einschnürung betragen, unabhängig davon, wo die Einschnürung ausgebildet ist.

"Oberhalb von X" bedeutet "weiter entfernt vom unteren Ende der Gehäusehülse als X". "Unterhalb von X" bedeutet "näher am unteren Ende der Gehäusehülse als X". Wenn die Einschnürung durch eine Vergrösserung des Innendurchmessers der Gehäusehülse ausgebildet ist, kann die Verstärkung an die Einschnürung angrenzen. Die Verstärkung kann sich auf der Höhe der Sensoranordnung befinden und insbesondere oberhalb einer Bodenplatte der Sensoranordnung. Die Verstärkung kann sich oberhalb der Einschnürung befinden, wenn die Einschnürung durch eine Verringerung des Aussendurchmessers der Gehäusehülse ausgebildet ist.

Es hat sich gezeigt, dass der erfindungsgemässe Drucksensor beispielsweise zum Erfassen von Drucken von mehr als 300bar, insbesondere mehr als 500bar, im Speziellen mehr als 750bar eingesetzt werden kann. Im Besonderen können Drucke bis 1000bar bei mindestens 10⁶ Druckzyklen erfasst werden. Der erfindungsgemässe Drucksensor ist zudem ohne weiteres bis zu einer Überlastgrenze von 1500bar einsetzbar, ohne beschädigt zu werden oder seine Eigenschaften anderweitig zu ändern.

Dabei kann die Membran eine glatte Scheibe, insbesondere eine kreisförmige Scheibe, sein. Diese ist bevorzugt in einem Randbereich mit der Gehäusehülse verbunden. Eine Dicke der Membran beträgt vorzugsweise 50µm bis 200pm, insbesondere 75µm bis 175µm, und im Speziellen 100pm bis 150µm. Eine Membran mit einer Einbuchtung oder anderweitig aufwändiger Geometrie ist nicht erforderlich. Es kann also eine sehr kostengünstige Membran eingesetzt werden. Die Membran kann aus mechanisch widerstandsfähigem und steifem Material wie aus Reinmetallen, Nickellegierungen, Kobaltlegierungen, Eisenlegierungen, usw. bestehen.

Die mechanischen Spannungen in der Membran, insbesondere in der Radialrichtung, und die mechanischen Spannungen in der mechanischen Verbindung von der Membran mit der Gehäusehülse, können dadurch im Besonderen stets unter der Elastizitätsgrenze des Materials der Membran sowie des Materials der mechanischen Verbindung von der Membran mit der Gehäusehülse gehalten werden. Bei exakt gleichen Längenänderungen der Gehäusehülse und der Sensoranordnung in Folge einer Druckänderung treten in der Membran kaum oder keine zusätzlichen mechanischen Spannungen auf, was die Lebensdauer des Drucksensors signifikant erhöht.

Die Gehäusehülse kann rohrförmig sein und zwei offene Enden aufweisen. Eines der beiden offenen Enden der Gehäusehülse dient beispielsweise der Druckmessung. Dieses Ende der Gehäusehülse wird im Folgenden das untere Ende der Gehäusehülse genannt. Das untere Ende der Gehäusehülse ist mit der Membran mechanisch verbunden. Die mechanische Verbindung von der Membran mit der Gehäusehülse ist eine Schweissverbindung.

Das andere Ende der Gehäusehülse dient typischerweise der Ableitung des Messsignals und dem Einbau des Drucksensors in ein Objekt. Dieses Ende wird im Folgenden das obere Ende der Gehäusehülse genannt. Das obere Ende der Gehäusehülse kann mit einem Gehäuseoberteil mechanisch verbunden sein. Weil das Gehäuseoberteil eine sehr viel grössere Querschnittsfläche als die Gehäusehülse haben kann, kann eine axiale Längenänderung des Gehäuseoberteils in Folge einer Druckänderung klein im Verhältnis zu einer axialen Längenänderung der Gehäusehülse sein. Ausserdem wirkt sich die axiale Längenänderung des Gehäuseoberteils, insbesondere des Teils des Gehäuseoberteils, der oberhalb einer mechanischen Verbindung von der Gehäusehülse mit dem Gehäuseoberteil liegt, gleichermassen auf die absolute Position des unteren Endes der Gehäusehülse und des unteren Endes der Sensoranordnung aus. Die Längenänderung des Teils des Gehäuseoberteils, der unterhalb der mechanischen Verbindung von der Gehäusehülse mit dem Gehäuseoberteil liegt, ist der Längenänderung der Sensoranordnung zuzurechnen. Eine axiale Längenänderung der Gehäusehülse entspricht also einer axialen Änderung der absoluten Position des unteren Endes der Gehäusehülse, und eine axiale Längenänderung der Sensoranordnung entspricht also einer axialen Änderung der absoluten Position des unteren Endes der Sensoranordnung. Eine exakt gleiche axiale Längenänderung der Gehäusehülse und der Sensoranordnung bedeutet also, dass keine axiale Relativbewegung zwischen dem unteren Ende der Gehäusehülse und dem unteren Ende der Sensoranordnung stattfindet.

Das obere Ende der Gehäusehülse kann einen Flansch aufweisen für den Einbau des Drucksensors in das Objekt, dessen Druck erfasst werden soll. Die Gehäusehülse kann aus mechanisch widerstandsfähigem und steifem Material wie aus Reinmetallen, Nickellegierungen, Kobaltlegierungen, Eisenlegierungen, usw. sein.

Die Gehäusehülse und die mit ihr verbundene Membran schützen die Sensoranordnung vor dem Medium, dessen Druck mit dem Drucksensor erfasst werden soll.

Ein erfindungsgemässer Drucksensor kann insbesondere einen zeitlich sich ändernden Druckverlauf mit einer zeitlichen Auflösung von bis zu 100kHz erfasst. Ferner kann der Drucksensor mit sehr kleinen Abmessungen gebaut werden. Dabei kann ein Aussendurchmesser im Bereich von 4mm bis 8mm, insbesondere im Bereich von 5.5mm bis 6.5mm und im Speziellen bei 5.5mm liegen, und eine Höhe kann im Bereich von 10mm bis 20mm, insbesondere im Bereich von 13mm bis 17mm, und im Speziellen bei 15mm liegen, so dass der Drucksensor auch in Objekten mit beschränktem Einbauraum einsetzbar ist.

Erfindungsgemäß weist die Gehäusehülse eine in der Axialrichtung der Gehäusehülse variierende Elastizität auf.

In einer weiteren Ausführungsform des erfindungsgemässen Drucksensors weist die Sensoranordnung mindestens ein piezoelektrisches Element auf, welches unter Wirkung einer Kraft elektrische Polarisationsladungen erzeugt.

Unter der Kraft ist hier insbesondere eine Normalkraft zu verstehen. Die Normalkraft kann von der Membran in Axialrichtung der Sensoranordnung auf das piezoelektrische Element der Sensoranordnung übertragen werden.

Ein piezoelektrisches Element eignet sich bestens zum Erfassen der Normalkraft, da die Polarisationsladungen mit elektrischen Mitteln gemessen und in ein elektrisches Signal umgewandelt werden können.

Piezoelektrische Elemente können piezoelektrische Scheiben oder Stäbe sein. Die Sensoranordnung kann eine ungerade Anzahl von piezoelektrischen Elementen aufweisen, zum Beispiel 1, 3, 5, 7, und so weiter. Piezoelektrische Scheiben können in der Sensoranordnung gestapelt sein.

Das piezoelektrische Element kann aus piezoelektrischem Kristallmaterial wie Quarz (SiO2 Einkristall), Calcium-Gallo-Germanat (Ca3Ga2Ge4O14 oder CGG), Langasit (La3Ga5SiO14 oder LGS), Turmalin, Galliumorthophosphat, usw. bestehen. Andere Materialien sind aber auch möglich, beispielsweise piezorestriktive Materialien.

In einer weiteren Ausführungsform des erfindungsgemässen Drucksensors weist die Sensoranordnung eine Vorspannanordnung auf, welche eine Vorspannhülse und eine Bodenplatte umfasst. Das piezoelektrische Element ist in diesem Fall in der Vorspannanordnung angeordnet.

Die Vorspannanordnung gewährleistet einen sehr guten elektrischen Kontakt zwischen den piezoelektrischen Elementen und den Elektroden des Drucksensors, so dass keine nichtkontaktierten Bereiche mit lokalen hohen elektrischen Spannungen und elektrischen Kriechströmen auftreten und sich auch Oberflächenrauheiten auf den Kontaktflächen schliessen, was zu einer exzellenten Linearität des Drucksensors führt. Die Linearität ist eine Abweichung der Proportionalität zwischen den unter Krafteinwirkung erzeugten elektrischen Polarisationsladungen und dem zu erfassenden Druck. Die Vorspannanordnung kann aus mechanisch widerstandsfähigem und steifem Material wie aus Reinmetallen, Nickellegierungen, Kobaltlegierungen, Eisenlegierungen, usw. bestehen.

In einer weiteren Ausführungsform des erfindungsgemässen Drucksensors ist die Vorspannanordnung in der Gehäusehülse angeordnet. Die Bodenplatte befindet sich zwischen der Membran und dem piezoelektrischen Element. Die Bodenplatte stellt insbesondere eine Wirkverbindung zwischen Membran und piezoelektrischem Element her.

Somit wird der zu erfassende Druck sehr gut von der Membran als Normalkraft auf die Bodenplatte und von dort weiter auf das piezoelektrische Element übertragen.

In einer weiteren Ausführungsform des erfindungsgemässen Drucksensors ist die Membran mit der Bodenplatte der Vorspannanordnung mechanisch verbunden.

Die mechanische Verbindung der Membran mit der Bodenplatte kann zum Beispiel eine stoffschlüssige Verbindung sein. Eine stoffschlüssige Verbindung kann beispielsweise eine Schweissverbindung sein. Die Membran kann mit der Bodenplatte insbesondere über eine oder mehrere Ringschweissverbindungen verbunden sein. Damit kann die Kraftübertragung von der Membran auf die Bodenplatte verbessert werden und die Lebensdauer der Membran und der Bodenplatte erhöht werden. Auch wird die Linearität des Drucksensors weiter verbessert.

In einer weiteren Ausführungsform des erfindungsgemässen Drucksensors weist das piezoelektrische Element Elektroden auf zum Abgreifen der unter Kraftwirkung erzeugten elektrischen Polarisationsladungen.

Über die Elektroden können die elektrischen Polarisationsladungen abgegriffen und als Ausgangssignale abgeleitet werden. Falls mehrere piezoelektrische Elemente zum Einsatz in einer Sensoranordnung kommen, können elektrische Polarisationsladungen gleichen Vorzeichens von verschiedenen piezoelektrischen Elementen über die Elektroden zusammengeführt und als Ausgangssignale abgeleitet werden. So können elektrische Polarisationsladungen gleichen Vorzeichens an eine seismische Masse geleitet werden und über einen Federkontakt von einer Stirnseite der seismischen Masse als Ausgangssignale abgegriffen werden. Ein solcher Abgriff der Ausgangssignale über einen Federkontakt ist einfach und kostengünstig in der Montage.

In einer weiteren Ausführungsform des erfindungsgemässen Drucksensors ist die Vorspannhülse mit der Bodenplatte formschlüssig verbunden.

Die formschlüssige Verbindung der Vorspannhülse mit der Bodenplatte kann beispielsweise darin bestehen, dass die Bodenplatte in der Vorspannhülse aufgehängt ist.

Eine formschlüssige Verbindung der Vorspannhülse mit der Bodenplatte gestattet eine gute Vorspannkraftübertragung von der Vorspannhülse auf die Bodenplatte. Entsprechende Vorspannhülsen und Bodenplatten sind gut und einfach zu fertigen.

In einer weiteren Ausführungsform des erfindungsgemässen Drucksensors weist die Bodenplatte einen Bodenplatteneinstich auf.

Der Bodenplatteneinstich kann zum Beispiel als eine in die Bodenplatte eingebrachte Ausnehmung und/oder Nut, insbesondere als eine ringförmige Nut, ausgeführt sein. Somit stellt der Bodenplatteneinstich eine Querschnittsminderung der Bodenplatte dar. Unter Querschnittsfläche ist eine Querschnittsfläche quer zur Axialrichtung der Gehäusehülse zu verstehen. Der Bodenplatteneinstich kann sich auf der in Bereichen zylinderförmigen Aussenfläche der Bodenplatte befinden. Der Bodenplatteneinstich kann zwischen dem piezoelektrischen Element und der Membran angeordnet sein, und insbesondere zwischen dem piezoelektrischen Element und einer formschlüssigen Verbindung der Bodenplatte mit der Vorspannhülse. Somit kann der Bodenplatteneinstich nahe bei dem piezoelektrischen Element und/oder nahe bei der formschlüssigen Verbindung der Bodenplatte mit der Vorspannhülse angeordnet sein.

Mit dem Bodenplatteneinstich können die mechanischen Spannungen im piezoelektrischen Element reduziert werden. Zusammen mit den erfindungsgemäss aufeinander abgestimmten Gehäusehülse und Sensoranordnung kann die Druckfestigkeit des Drucksensors nochmals in unerwarteter Weise verbessert werden.

In einer weiteren Ausführungsform des erfindungsgemässen Drucksensors ist der Bodenplatteneinstich so bemessen, dass im Arbeitsbereich des Drucksensors mechanische Spannungen im piezoelektrischen Element kleiner als eine Bruchgrenze des Materials des piezoelektrischen Elementes sind. Die Bruchgrenze ist eine Materialeigenschaft und gibt eine mechanische Zugspannung an, die das Material aushalten kann, bevor es bricht. Mit dem Bodenplatteneinstich können mechanische Spannungen im piezoelektrischen Element soweit reduziert werden, dass sie sicher unter der Bruchgrenze des Materials des piezoelektrischen Elementes liegen, was wiederum die Lebensdauer des Drucksensors erhöht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen Schnitt in Axialrichtung durch eine Ausführungsform eines Drucksensors;
- Fig. 2: eine Detailansicht des Ausschnittes A aus Fig. 1;
- Fig. 3: eine Explosionszeichnung einer Sensoranordnung ohne Bodenplatte und ohne Vorspannhülse;
- Fig. 4: eine Seitenansicht einer zusammengebauten Sensoranordnung mit verschweissten Elektroden (ohne Bodenplatte und ohne Vorspannhülse);
- Fig. 5: eine Draufsicht einer zusammengebauten Sensoranordnung mit verschweissten Elektroden (ohne Bodenplatte und ohne Vorspannhülse); und
- Fig. 6: eine Seitenansicht einer zusammengebauten Sensoranordnung mit verschweissten und abgebogenen Elektroden (ohne Bodenplatte und ohne Vorspannhülse) .

Grundsätzlich sind in den Figuren gleiche Teile mit gleichen Bezugszeichen versehen.

### Wege zur Ausführung der Erfindung

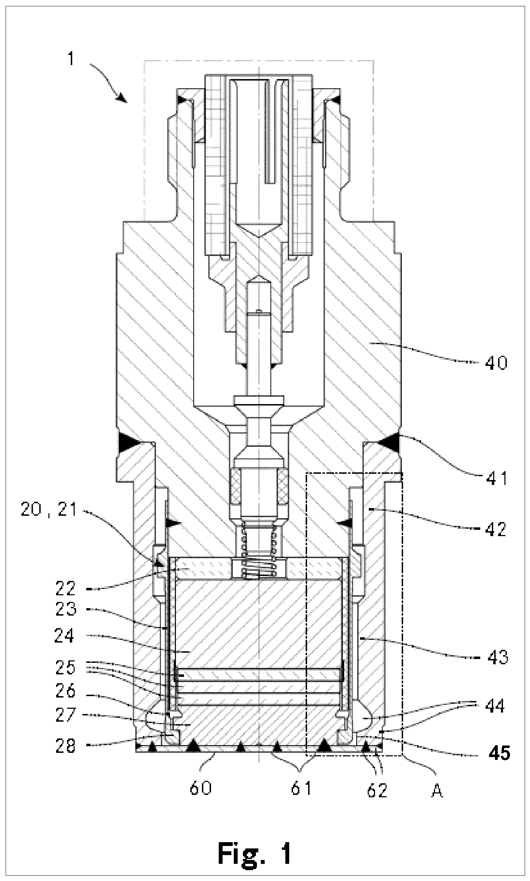

Fig. 1 zeigt einen Schnitt entlang der länglichen Ausdehnung einer Ausführungsform des erfindungsgemässen Drucksensors 1. Der Schnitt ist ein Längsschnitt in einer Axialrichtung. Die Axialrichtung ist in Fig. 1 als strichpunktierte Achse eingezeichnet und verläuft in Fig. 1 von unten nach oben weitgehend mittig durch den dargestellten Drucksensor 1 und seine Bauteile. Eine Radialrichtung steht senkrecht zur Axialrichtung. Die Radialrichtung ist in Fig. 1 nicht eingezeichnet und verläuft in Fig. 1 von links nach rechts durch den dargestellten Drucksensor 1 und seine Bauteile.

Der Drucksensor 1 weist eine Sensoranordnung 20 und eine Vorspannanordnung 21 auf. Die Vorspannanordnung 21 besteht aus einer zylindrischen Vorspannhülse 23 und einer zylinderförmigen Bodenplatte 27. Die Vorspannhülse 23 ist unter Zugspannung mit dem Gehäuseoberteil 40 hermetisch verbunden. Die Bodenplatte 27 ist über einen in der Radialrichtung nach innen ragenden Vorsprung 28 formschlüssig in die Vorspannhülse 23 eingehängt zur Aufnahme deren Zugspannung.

Innerhalb der Vorspannanordnung 21 befinden sich - unter Vorspannung - in einem Stapel von unten zunächst drei scheibenförmige piezoelektrische Elemente 25 mit Elektroden (nicht gezeigt), da drüber eine seismische Masse 24, und da drüber ein weiteres piezoelektrisches Element 22.

Die Sensoranordnung 20 befindet sich in einer zylinderförmigen Gehäusehülse 42, deren oberes Ende mit dem Gehäuseoberteil 40 stoffschlüssig mittels einer ersten Schweissverbindung 41 verbunden ist. In einem Mittenbereich weist die Gehäusehülse 42 eine ringförmig umlaufende Verstärkung 43 auf. Die Verstärkung 43 ist durch eine inwendige Verdickung der Wand der Gehäusehülse 42 ausgebildet. Der Innendurchmesser der Gehäusehülse 42 ist im Bereich der Verstärkung 43 kleiner als der mittlere Innendurchmesser der Gehäusehülse 42. Unterhalb der Verstärkung 43, d. h. in einem Bereich der mechanischen Verbindung der Membran 60 mit der Gehäusehülse 42, folgt auf die Verstärkung 43 eine Einschnürung 44 in Form einer umlaufenden konkav gewölbten Nut bzw. Ausnehmung. Die Einschnürung 44 ist an der Gehäusehülse inwendig angeordnet. Die Einschnürung 44 wird gebildet durch eine Vergrösserung des Innendurchmessers der Gehäusehülse 42. Die Einschnürung 44 hat eine Querschnittsform wie der Querschnitt einer Tropfenhälfte. Im Bereich der Einschnürung 44 entspricht die Wandstärke der Gehäusehülse 42 an ihrer dünnsten Stelle in etwa der Hälfte der mittleren Wandstärke der Gehäusehülse 42. Unterhalb der inwendigen Einschnürung 44 folgt ein Bereich mit einem Flansch 45. Im Bereich des Flansches 45 an der Aussenwand der Gehäusehülse 42 eine weitere Einschnürung 44 angebracht, wobei die weitere Einschnürung 44 an der Aussenwand der Gehäusehülse 42 durch eine Verringerung des Aussendurchmessers der Gehäusehülse 42 gekennzeichnet ist.

Der Flansch 45 dient der eigentlichen mechanischen Verbindung von Membran 60 mit der Gehäusehülse 42. Die scheibenförmige Membran 60 mit einer Dicke von z.B. 130 µm verschliesst das untere Ende der Gehäusehülse 42 hermetisch auf Grund einer Gehäusehülsenschweissverbindung 62. Die Gehäusehülsenschweissverbindung 62 ist durch zwei konzentrische Ringschweissverbindungen ausgebildet, wobei eine Ringschweissverbindung der zwei konzentrischen Ringschweissverbindungen die Aussenseite der Gehäusehülse 42 mit der Aussenseite der Membran 60 verbindet und eine andere Ringschweissverbindung der zwei konzentrischen Ringschweissverbindungen die Membrane 60 von unten mit der Unterseite der Gehäusehülse 42 verbindet. Des Weiteren verbindet eine Bodenplattenringschweissverbindung 61 die Membran 60 mit der Bodenplatte 27. Die Bodenplattenringschweissverbindung 61 ist in Form von zwei weiteren konzentrischen Ringschweissverbindungen ausgebildet.

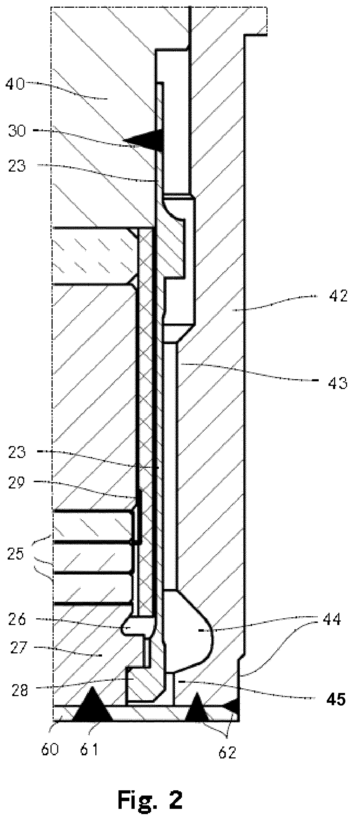

Fig. 2 zeigt eine Detailansicht des Ausschnitts A der Fig. 1. Eine zweite Ringschweissverbindung 30 verbindet die Vorspannhülse 23 mit dem Gehäuseoberteil 40. Die Gehäusehülse 42 mit der Verstärkung 43, den Einschnürungen 44 und dem Flansch 45 ist vergrössert dargestellt. Zwischen den drei scheibenförmigen piezoelektrischen Elementen 25 sowie darüber und darunter befinden sich Elektroden 29, deren Anschlussfahren ausserhalb der drei scheibenförmigen piezoelektrischen Elemente 25 angeordnet und nach oben abgebogen sind, wo sie sich zwischen den drei scheibenförmigen piezoelektrischen Elementen 25 und der Vorspannhülse 23 befinden. In der Bodenplatte 27 befindet sich der Bodenplatteneinstich 26 in Form einer konkav gewölbten umlaufenden Nut. Zum besseren Verständnis sind die bereits in Fig. 1 dargestellten Bezugszeichen grösstenteils auch in Fig. 2 dargestellt. Auf eine vollständige Wiederholung der Erläuterungen wird hingegen verzichtet.

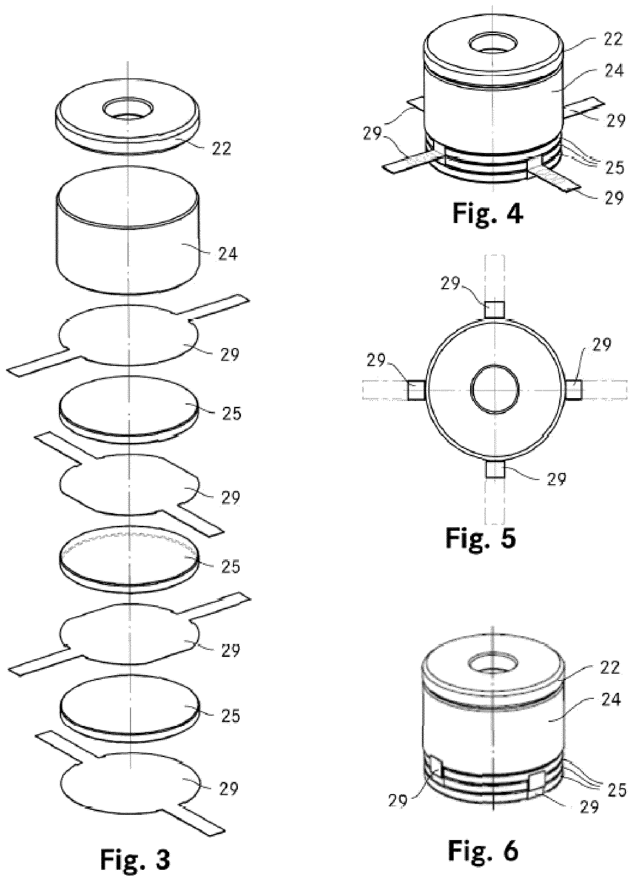

Fig. 3 zeigt eine Explosionszeichnung einer Sensoranordnung 20, allerdings ohne Vorspannhülse 23 und ohne Bodenplatte 27. Die Elektroden 29 und die scheibenförmigen piezoelektrischen Elemente 25 sind abwechselnd aufeinander geschichtet. Zwei der vier Elektroden 29 verbinden jeweils die Oberflächen der piezoelektrischen Scheiben 25 mit der gleichen Polarität. Über der obersten Elektrode 29 folgt die seismische Masse 24 und darüber das weitere piezoelektrische Element 22. Die seismische Masse 24 und das weitere piezoelektrische Element 22 erzeugen für eine beschleunigte Bewegung des Drucksensors 1 in Axialrichtung elektrische Polarisationsladungen, welche als elektrische Kompensationsladungen verwendet werden. Die elektrischen Kompensationsladungen haben das umgekehrte Vorzeichen der durch die beschleunigte Bewegung des Drucksensors 1 an den piezoelektrischen Elementen 25 erzeugten und von der obersten und der drittobersten Elektroden 29 abgegriffenen und als Ausgangssignale verwendeten piezoelektrischen Polarisationsladungen haben. Die Ausgangssignale und die elektrischen Kompensationsladungen sind über die seismische Masse zusammengeführt. Dadurch wird eine Beschleunigungskompensation des Drucksensors 1 realisiert. Ein Federkontakt greift die Ausgangsignale von einer Stirnseite der seismischen Masse 24 ab und leitet sie an eine Buchse für eine Steckverbindung eines Signalkabels zu einer Auswerteeinheit. Die Buchse ist an der von der Membran 60 abgewandten Seite des Gehäuseoberteils 40 angebracht.

Fig. 4 zeigt eine Seitenansicht einer zusammengebauten Sensoranordnung 20 nach Fig. 3 (ohne Bodenplatte 27 und ohne Vorspannhülse 23) mit verschweissten Elektroden 29.

Fig. 5 zeigt eine Draufsicht einer zusammengebauten Sensoranordnung 20 (ohne Bodenplatte 27 und ohne Vorspannhülse 23) nach Fig. 3 und Fig. 4 mit verschweissten Elektroden 29.

Fig. 6 zeigt eine Seitenansicht einer zusammengebauten Sensoranordnung 20 (ohne Bodenplatte 27 und ohne Vorspannhülse 23) nach Figuren 3-5 mit verschweissten und abgebogenen Elektroden 29 zum Einbau in eine Vorspannanordnung 21 bestehend aus Bodenplatte 27 (nicht gezeigt) und Vorspannhülse 23 (nicht gezeigt).

Versuche haben gezeigt, dass mit dem Drucksensor 1 Drucke bis 1000bar bei mindestens 10⁶ Druckzyklen gemessen werden können und der Drucksensor 1 ohne weiteres bis zu einer Überlastgrenze von 1500bar einsetzbar ist. Dies auch bei schnellen Druckverläufen von bis zu 100kHz.

Der Drucksensor 1 oder die zylinderförmige Gehäusehülse 42 kann prinzipiell auch eine nichtrunde Form, z.B. eine quaderförmige Form haben. Ebenfalls möglich ist es, anstelle der Sensoranordnung 20 eine andere Sensoranordnung, z.B. mit nebeneinander angeordneten stabförmigen piezoelektrischen Elementen vorzusehen. Auch kann beispielsweise eine anders ausgeformte Membran, z.B. eine nichtflache oder gewölbte Membran, vorgesehen sein. Weitere Abwandlungen erschliessen sich dem Fachmann aufgrund seines Fachwissens.

Zusammenfassend ist festzustellen, dass der erfindungsgemässe Drucksensor mit einer einfachen scheibenförmigen Membran dank der Verstärkungen und Einschnürungen in der Gehäusehülse hohe Drucke mit einer langen Lebensdauer erfassen kann. Erwähnenswert sind auch die kleinen Abmessungen des Drucksensors, so dass er auch bei beschränktem Einbauraum bestens einsetzbar ist. Hervorzuheben sind die Vibrationskompensation des Drucksensors sowie seine Fähigkeit, auch zeitlich ändernde Druckverläufe zu erfassen.

### Bezugszeichenliste

| | |
|---|---|
| 1 | Drucksensor |
| 20 | Sensoranordnung |
| 21 | Vorspannanordnung |
| 22 | weiteres piezoelektrisches Element |
| 23 | Vorspannhülse |
| 24 | seismische Masse |
| 25 | piezoelektrisches Element |
| 26 | Bodenplatteneinstich |
| 27 | Bodenplatte |
| 28 | formschlüssige Verbindung |
| 29 | Elektroden |
| 30 | zweite Schweissverbindung |
| 40 | Gehäuseoberteil |
| 41 | erste Schweissverbindung |
| 42 | Gehäusehülse |
| 43 | Verstärkung |
| 44 | Einschnürung |
| 45 | Flansch |
| 60 | Membran |
| 61 | Bodenplattenringschweissverbindung |
| 62 | Gehäusehülsenschweissverbindung |

## Patentansprüche

1. Drucksensor (1) zum Erfassen von Drücken bis 1000bar, mit
a) einer Sensoranordnung (20),
b) einer Gehäusehülse (42) zur Aufnahme der Sensoranordnung (20),
c) einer mit der Sensoranordnung (20) in Wirkverbindung stehende Membran (60) zur Übertragung eines Druckes, wobei die Membran (60) mit der Gehäusehülse (42) mechanisch verbunden ist, wobei die Membran (60) ein unteres Ende der Gehäusehülse (42) auf Grund einer Gehäusehülsenschweissverbindung (62) hermetisch verschliesst,
d) wobei der Druck in einer Axialrichtung des Drucksensors (1) auf die Membran (60) wirkt, und wobei der Druck in einer Radialrichtung des Drucksensors (1) auf die Gehäusehülse (42) wirkt;
wobei die Gehäusehülse (42) eine Einschnürung (44) aufweist, welche Einschnürung (44) in einem Bereich der mechanischen Verbindung der Membran (60) mit der Gehäusehülse (42) angeordnet ist;
**dadurch gekennzeichnet, dass die** Einschnürung (44) als eine entlang eines inneren Umfangs der Gehäusehülse (42) umlaufende Ausnehmung und/oder Nut ausgebildet ist, welche Einschnürung (44) in dem Bereich der Verbindung die Elastizität der Gehäusehülse (42) erhöht, welche bereichsweise erhöhte Elastizität der Gehäusehülse (42) bei hohen Drücken von mehr als 300bar eine reversible Längenänderung der Gehäusehülse (42) sowohl in Radialrichtung als auch in Axialrichtung zur Folge hat.

2. Drucksensor (1) nach Anspruch 1, **dadurch gekennzeichnet, dass** die Gehäusehülse (42) eine Verstärkung (43) aufweist, welche Verstärkung (43) weiter entfernt vom unteren Ende der Gehäusehülse (42) als die Einschnürung (44) angeordnet ist, welche Verstärkung (43) die Elastizität der Gehäusehülse (42) bereichsweise erniedrigt, welche bereichsweise erniedrigte Elastizität der Gehäusehülse (42) bei hohen Drücken von mehr als 300bar eine reversible Längenänderung der Gehäusehülse (42) sowohl in Radialrichtung als auch in Axialrichtung zur Folge hat.

3. Drucksensor (1) nach Anspruch 1, **dadurch gekennzeichnet, dass** eine Tiefe der Einschnürung (44) in einer Radialrichtung in etwa die Hälfte einer mittleren Wandstärke der Gehäusehülse (42) beträgt.

4. Drucksensor (1) nach Anspruch 2, **dadurch gekennzeichnet, dass** die Verstärkung (43) in einem Mittenbereich der Gehäusehülse (42) angeordnet ist; dass die Verstärkung (43) in diesem Mittenbereich die Elastizität der Gehäusehülse (42) erniedrigt; und dass sich bei einem hohen Druck ein Durchmesser der Gehäusehülse (42) in diesem Bereich in Radialrichtung weniger verringert.

5. Drucksensor (1) nach einem der Ansprüche 1 bis 4, **dadurch gekennzeichnet, dass** bei hohen Drücken von mehr als 300bar über die absolute Länge der Gehäusehülse (42) gesehen, sich die Gehäusehülse (42) in ihrem Mittenbereich konkav durchbiegt.

6. Drucksensor (1) nach Anspruch 1, **dadurch gekennzeichnet, dass** die Einschnürung (44) derart ausgebildet ist, dass bei hohen Drücken von mehr als 300bar eine Differenz zwischen einer Längenänderung der Gehäusehülse (42) und einer Längenänderung der Sensoranordnung (20) weitgehend gleich Null ist.

7. Drucksensor (1) nach Anspruch 2, **dadurch gekennzeichnet, dass** die Verstärkung (43) derart ausgebildet ist, dass bei hohen Drücken von mehr als 300bar eine Differenz zwischen einer Längenänderung der Gehäusehülse (42) und einer Längenänderung der Sensoranordnung (20) weitgehend gleich Null ist.

8. Drucksensor (1) nach einem der Ansprüche 6 oder 7, **dadurch gekennzeichnet, dass** bei einer Druckänderung eine daraus resultierende Längenänderung der Gehäusehülse (42) kleiner/gleich einer Elastizitätsgrenze eines Materials der Gehäusehülse (42) ist; und dass bei hohen Drücken von mehr als 300bar eine Längenänderung der Sensoranordnung (20) kleiner/gleich einer Elastizitätsgrenze eines Materials der Sensoranordnung (20) ist.

9. Drucksensor (1) nach einem der Ansprüche 6 bis 8, **dadurch gekennzeichnet, dass** bei hohen Drücken von mehr als 300bar die Differenz zwischen der Längenänderung der Gehäusehülse (42) und der Längenänderung der Sensoranordnung (20) so gering ist, dass aus der Differenz resultierende mechanische Spannungen in der mechanischen Verbindung der Membran (60) mit der Gehäusehülse (42) kleiner/gleich einer Elastizitätsgrenze des Materials der mechanischen Verbindung der Membran (60) mit der Gehäusehülse (42) und/oder des Materials der Membran (60) selbst ist.

10. Drucksensor (1) nach einem der Ansprüche 1 bis 9, **dadurch gekennzeichnet, dass** der Druck in einer Axial-richtung des Drucksensors (1) nur auf die Membran (60) wirkt; und dass der Druck in einer Radialrichtung des Drucksensors (1) nur auf die Gehäusehülse (42) wirkt.

11. Drucksensor (1) nach einem der Ansprüche 1 bis 10, **dadurch gekennzeichnet, dass** die Sensoranordnung (20) mindestens ein piezoelektrisches Element (22, 25, 26, 27) aufweist, welches unter Wirkung einer Kraft elektrische Polarisationsladungen erzeugt; und dass die Sensoranordnung (20) eine Vorspannanordnung (21) aufweist, welche eine Vorspannhülse (23) und eine Bodenplatte (27) umfasst, und in welcher Vorspannanordnung (21) das piezoelektrische Element (22, 25, 26, 27) angeordnet ist.

12. Drucksensor (1) nach Anspruch 11, **dadurch gekennzeichnet, dass** die Vorspannanordnung (21) in der Gehäusehülse (42) angeordnet ist, wobei sich die Bodenplatte (27) zwischen der Membran (60) und dem piezoelektrischen Element (22, 25, 26, 27) befindet; und dass die Membran (60) mit der Bodenplatte (27) der Vorspannanordnung (21) stoffschlüssig verbunden ist.

13. Drucksensor (1) nach einem der Ansprüche 11 oder 12, **dadurch gekennzeichnet, dass** das piezoelektrische Element (22, 25, 26, 27) Elektroden (29) aufweist zum Abgreifen der unter Kraftwirkung erzeugten elektrischen Polarisationsladungen.

14. Drucksensor (1) nach Anspruch 13, **dadurch gekennzeichnet, dass** als Ausgangssignale verwendete elektrische Polarisationsladungen gleichen Vorzeichens an eine seismische Masse (24) geleitet sind; und dass ein Federkontakt die Ausgangssignale von einer Stirnseite der seismischen Masse (24) abgreift.

15. Drucksensor (1) nach einem der Ansprüche 11 bis 14, **dadurch gekennzeichnet, dass** die Vorspannhülse (23) mit der Bodenplatte (27) formschlüssig verbunden ist; dass die Bodenplatte (27) einen Bodenplatteneinstich (26) aufweist; und dass der Bodenplatteneinstich (26) so bemessen ist, dass im Arbeitsbereich des Drucksensors (1) mechanische Spannungen im piezoelektrischen Element (22, 25, 26, 27) kleiner als eine Bruchgrenze des Materials des piezoelektrischen Elementes (22, 25, 26, 27) sind.

## Claims

1. A pressure sensor (1) for capturing pressures of up to 1000 bar comprising
a) a sensor assembly (20),
b) a housing sleeve (42) for accommodating the sensor assembly (20),
c) a diaphragm (60) in operative connection with said sensor assembly (20) for transmitting a pressure, said diaphragm (60) being mechanically connected to the housing sleeve (42), wherein said diaphragm (60) hermetically seals a lower end of the housing sleeve (42) by means of a housing sleeve welded joint (62),
d) wherein in an axial direction of the pressure sensor (1) the pressure acts onto the diaphragm (60) and wherein in a radial direction of the pressure sensor (1) the pressure acts onto the housing sleeve (42);
wherein the housing sleeve (42) comprises a constriction (44), said constriction (44) being located in the area of the mechanical connection of the diaphragm (60) and the housing sleeve (42);
**characterized in that** said constriction (44) is formed as a recess and/or groove extending along an inner perimeter of the housing sleeve (42), wherein said constriction (44) increases the elasticity of the housing sleeve (42) in the area of the connection, wherein at high pressures of more than 300 bar the locally increased elasticity of the housing sleeve (42) results in a reversible change in length of the housing sleeve (42) both in the radial and axial directions.

2. The pressure sensor (1) according to claim 1, **characterized in that** the housing sleeve (42) comprises a reinforcement (43), which reinforcement (43) is located further away from the lower end of the housing sleeve (42) than the constriction (44), wherein said reinforcement (43) locally decreases the elasticity of the housing sleeve (42), wherein at high pressures of more than 300 bar said locally decreased elasticity of the housing sleeve (42) results in a reversible change in length of the housing sleeve (42) both in the radial and axial directions.

3. The pressure sensor (1) according to claim 1, **characterized in that** a depth of the constriction (44) in a radial direction is equal to about half of a mean wall thickness of the housing sleeve (42).

4. The pressure sensor (1) according to claim 2, **characterized in that** the reinforcement (43) is located in a central portion of the housing sleeve (42); **in that** said reinforcement (43) in said central portion decreases the elasticity of the housing sleeve (42); and **in that** at a high pressure a diameter of the housing sleeve (42) in said portion is reduced to a smaller extent in the radial direction.

5. The pressure sensor (1) according to any of the claims 1 to 4, **characterized in that** at high pressures of more than 300 bar over the absolute length of the housing sleeve (42) the housing sleeve (42) assumes a concave bend in its central portion.

6. The pressure sensor (1) according to claim 1, **characterized in that** the constriction (44) is configured such that at high pressures of more than 300 bar a difference between a change in length of the housing sleeve (42) and a change in length of the sensor assembly (20) is substantially equal to zero.

7. The pressure sensor (1) according to claim 2, **characterized in that** the reinforcement (43) is configured such that at high pressures of more than 300 bar a difference between a change in length of the housing sleeve (42) and a change in length of the sensor assembly (20) is substantially equal to zero.

8. The pressure sensor (1) according to any of the claims 6 or 7, **characterized in that** upon a change in pressure a change in length of the housing sleeve (42) resulting therefrom is less than/equal to an elastic limit of a material of the housing sleeve (42); and **in that** at high pressures of more than 300 bar a change in length of the sensor assembly (20) is less than/equal to an elastic limit of a material of the sensor assembly (20).

9. The pressure sensor (1) according to any of the claims 6 to 8, **characterized in that** at high pressures of more than 300 bar the difference between the change in length of the housing sleeve (42) and the change in length of the sensor assembly (20) is so small that mechanical stresses within the mechanical connection of the diaphragm (60) and the housing sleeve (42) resulting from said difference are lower than/equal to an elastic limit of the material of the mechanical connection of the diaphragm (20) and the housing sleeve (42) and/or of the material of the diaphragm (20) itself.

10. The pressure sensor (1) according to any of the claims 1 to 9, **characterized in that** in an axial direction of the pressure sensor (1) the pressure only acts onto the diaphragm (60) and that in a radial direction of the pressure sensor (1) the pressure only acts onto the housing sleeve (42).

11. The pressure sensor (1) according to any of the claims 1 to 10, **characterized in that** the sensor assembly (20) comprises at least one piezoelectric element (22, 25, 26, 27) that generates electric polarization charges under an applied force; and **in that** the sensor assembly (20) comprises a preloading assembly (21) comprising a preloading sleeve (23) and a base plate (27), and in which preloading assembly (21) the piezoelectric element (22, 25, 26, 27) is arranged.

12. The pressure sensor (1) according to claim 11, **characterized in that** the preloading assembly (21) is disposed in the housing sleeve (42) wherein the base plate (27) is arranged between the diaphragm (60) and the piezoelectric element (22, 25, 26, 27); and **in that** the diaphragm (60) is connected to the base plate (27) of the preloading assembly (21) by material bonding.

13. The pressure sensor (1) according to any of the claims 11 or 12, **characterized in that** the piezoelectric element (22, 25, 26, 27) comprises electrodes (29) for receiving and transmitting the electric polarization charges generated under the applied force.

14. The pressure sensor (1) according to claim 13, **characterized in that** electrical polarization charges of the same polarity used as the output signals are transmitted to a seismic mass (24); and **in that** a spring contact receives and transmits the output signals from a front face of said seismic mass (24).

15. The pressure sensor (1) according to any of the claims 11 to 14, **characterized in that** the preloading sleeve (23) and the base plate (27) are connected in a form-fitting manner; **in that** the base plate (27) comprises a base plate recess (26); and **in that** the dimensions of the base plate recess (26) are such that in the working range of the pressure sensor (1) mechanical stresses within the piezoelectric element (22, 25, 26, 27) are lower than an ultimate tensile strength of the material of the piezoelectric element (22, 25, 26, 27) .

## Revendications

1. Capteur de pression (1) pour capturer des pressions allant jusqu'à 1000 bar, comprenant
a) un ensemble capteur (20),
b) une gaine de boîtier (42) pour recevoir l'ensemble capteur (20),
c) un diaphragme (60) en liaison opérationnelle avec ledit ensemble capteur (20) pour transmettre une pression, ledit diaphragme (60) étant relié mécaniquement à la gaine de boîtier (42), dans lequel ledit diaphragme (60) ferme hermétiquement une extrémité inférieure de la gaine de boîtier (42) au moyen d'un joint soudé de gaine de boîtier (62),
d) dans lequel la pression agit sur le diaphragme (60) dans une direction axiale du capteur de pression (1), et dans lequel la pression agit sur la gaine de boîtier (42) dans une direction radiale du capteur de pression (1);
dans lequel ladite gaine de boîtier (42) comprend une constriction (44), ladite constriction (44) étant situé dans la zone de la connexion mécanique entre le diaphragme (60) et la gaine de boîtier (42) ;
**caractérisé en ce que** ladite constriction (44) est en forme d'un évidement et/ou une rainure s'étendant le long d'un périmètre intérieur de la gaine de boîtier (42), laquelle constriction (44) augmente, dans la zone de la connexion, l'élasticité de la gaine de boîtier (42), dans lequel à des pressions élevées de plus de 300 bar, l'élasticité localement augmentée de la gaine de boîtier (42) cause un changement réversible de la longueur de la gaine de boîtier (42) à la fois dans la direction radiale et axiale.

2. Capteur de pression (1) selon la revendication 1, **caractérisé en ce que** la gaine de boîtier (42) comprend un renforcement (43), lequel renforcement (43) est situé plus loin de l'extrémité inférieure de la gaine de boîtier (42) que la constriction (44), dans lequel ledit renforcement (43) diminue localement l'élasticité de la gaine de boîtier (42), dans lequel à des pressions élevées de plus de 300 bar, ladite élasticité localement diminuée de la gaine de boîtier (42) cause un changement réversible de la longueur de la gaine de boîtier (42) à la fois dans la direction radiale et axiale.

3. Capteur de pression (1) selon la revendication 1, **caractérisé en ce qu'**une profondeur de la constriction (44) dans une direction radiale est environ égale à la moitié d'une épaisseur de paroi moyenne de la gaine de boîtier (42).

4. Capteur de pression (1) selon la revendication 2, **caractérisé en ce que** le renforcement (43) est situé dans une partie centrale de la gaine de boîtier (42) ; **en ce que** dans ladite partie centrale ledit renforcement (43) diminue l'élasticité de la gaine de boîtier (42) ; et **en ce qu'**à une pression élevée, un diamètre de la gaine de boîtier (42) dans ladite partie est réduit dans une moindre mesure dans la direction radiale.

5. Capteur de pression (1) selon l'une quelconque des revendications 1 à 4, **caractérisé en ce que,** pour des pressions élevées de plus de 300 bar sur la longueur absolue de la gaine de boîtier (42), la gaine de boîtier (42) prend une courbure concave dans sa partie centrale.

6. Capteur de pression (1) selon la revendication 1, **caractérisé en ce que** la constriction (44) est configuré de telle sorte qu'à des pressions élevées de plus de 300 bar, une différence entre un changement de longueur de la gaine de boîtier (42) et un changement de longueur de l'ensemble capteur (20) est sensiblement égale à zéro.

7. Capteur de pression (1) selon la revendication 2, **caractérisé en ce que** le renforcement (43) est configuré de telle sorte qu'à des pressions élevées de plus de 300 bar, une différence entre un changement de longueur de la gaine de boîtier (42) et un changement de longueur de l'ensemble capteur (20) est sensiblement égale à zéro.

8. Capteur de pression (1) selon l'une quelconque des revendications 6 ou 7, **caractérisé en ce que** lors d'une variation de pression, une variation de la longueur de la gaine de boîtier (42) qui en résulte est inférieure/égale à une limite élastique d'un matériau de la gaine de boîtier (42) ; et **en ce que**, pour des pressions élevées de plus de 300 bar, une variation de la longueur de l'ensemble capteur (20) est inférieure/égale à une limite élastique d'un matériau de l'ensemble capteur (20).

9. Capteur de pression (1) selon l'une quelconque des revendications 6 à 8, **caractérisé en ce qu'**à des pressions élevées de plus de 300 bar, la différence entre la variation de la longueur de la gaine de boîtier (42) et la variation de la longueur de l'ensemble capteur (20) est si faible que les contraintes mécaniques dans la liaison mécanique entre le diaphragme (60) et la gaine de boîtier (42) résultant de ladite différence sont inférieures/égales à une limite élastique du matériau de la liaison mécanique entre le diaphragme (20) et la gaine de boîtier (42) et/ou du matériau du diaphragme (20) lui-même.

10. Capteur de pression (1) selon l'une quelconque des revendications 1 à 9, **caractérisé en ce que** dans une direction axiale du capteur de pression (1) la pression n'agit que sur le diaphragme (60) et **en ce que** dans une direction radiale du capteur de pression (1) la pression n'agit que sur la gaine de boîtier (42).

11. Capteur de pression (1) selon l'une quelconque des revendications 1 à 10, **caractérisé en ce que** l'ensemble capteur (20) comprend au moins un élément piézoélectrique (22, 25, 26, 27) qui génère des charges de polarisation électrique sous l'effet d'une force appliquée ; et **en ce que** l'ensemble capteur (20) comprend un assemblage de précontrainte (21) comprenant une gaine de précontrainte (23) et une plaque de base (27), et dans lequel ledit élément piézoélectrique (22, 25, 26, 27) est agencé dans l'assemblage de précontrainte (21).

12. Capteur de pression (1) selon la revendication 11, **caractérisé en ce que** l'assemblage de précontrainte (21) est agencé dans la gaine de boîtier (42) de sorte que la plaque de base (27) est disposée entre le diaphragme (60) et l'élément piézoélectrique (22, 25, 26, 27) ; et **en ce que** le diaphragme (60) est relié à la plaque de base (27) de l'ensemble de précontrainte (21) par une liaison de matière.

13. Capteur de pression (1) selon l'une quelconque des revendications 11 ou 12, **caractérisé en ce que** l'élément piézoélectrique (22, 25, 26, 27) comprend des électrodes (29) pour recevoir et transmettre les charges de polarisation électrique générées sous la force appliquée.

14. Capteur de pression (1) selon la revendication 13, **caractérisé en ce que** des charges de polarisation électrique de la même polarité qui sont utilisées comme des signaux de sortie sont transmises à une masse sismique (24) ; et **en ce qu'**un contact à ressort reçoit et transmet les signaux de sortie depuis une face frontale de la masse sismique (24).

15. Capteur de pression (1) selon l'une quelconque des revendications 11 à 14, **caractérisé en ce que** la gaine de précontrainte (23) et la plaque de base (27) sont reliés par complémentarité de forme ; **en ce que** la plaque de base (27) comprend un évidement de plaque de base (26) et **en ce que** les dimensions de l'évidement de plaque de base (26) sont telles que, dans la plage de travail du capteur de pression (1), les contraintes mécaniques à l'intérieur de l'élément piézoélectrique (22, 25, 26, 27) sont inférieures à une résistance à la traction ultime du matériau de l'élément piézoélectrique (22, 25, 26, 27).
